# EUROPEAN PATENT APPLICATION

(11) **EP 1 517 472 A1**
(43) Date of publication of application: **23.03.2005**
(21) Application number: 04300414.2
(22) Date of filing: 29.06.2004
(51) Int. Cl.: H04L 12/18

(54) **Method for providing multicast video streams via an xDSL access system**

(30) Priority: 01.07.2003 US 483648 P
(71) Applicant: ALCATEL, 75008 Paris (FR)
(72) Inventor: Aboukarr, Bakri, Kanata, Ontario K2K 2R8 (CA); Pauwels, Ludwig Alice Julienne, 9120 Beveran (BE); NGuyen, Dat Ba, Ottawa, Ontario K1N 5K7 (CA)
(74) Representative: Lenne, Laurence

(57) **Abstract**

An xDSL access system initiates an ATM point-to-multipoint connection with a source connected to the ATM network responsive to an IGMP control message received from one of the end user systems requesting a particular data stream. The source formats the data stream into IP packets having an IP multicast address. These IP packets are first encapsulated into Ethernet frames and then the source ATM encapsulates the Ethernet frames into ATM cells and launches the cells into the ATM network. The xDSL access system receives these cells over the ATM point-to-multipoint connection and transmits the cells to the end user system. The end user receives the xDSL modulated signal, reassembles the IP packets from the ATM cells and sends the packets to the end user; and then the end user receives the IP packets and re-formats them into a particular data stream.

## Description

### REFERENCE TO RELATED APPLICATION

The present application is the subject of provisional application No. 60/483,648 entitled IGMP on NT Architecture for which priority is claimed.

### BACKGROUND AND BRIEF DESCRIPTION OF THE INVENTION

The invention relates to the problem of providing Internet Group Management Protocol (IGMP) on a DSL access system, for example, the Alcatel 7300 ASAM.

The prior art provides IGMP on a router (IP Server) in the Alcatel 7300 ASAM. The router comprises an IP services module (ISM) and a controller (Network Termination - NT), each being on separate circuit cards.

The prior art approach spans two cards. Consequently it is not as efficient as a one-card solution would be. A simpler, more efficient solution is desirable.

According to the invention, the video multicast is performed at the ATM level by use of a point-to-multipoint connection, and controlled through IGMP control messages terminating on the NT without usage of the "IP-Server" .

Please refer to the "List of Abbreviations" section at the end of this disclosure for any acronyms not defined in the text.

The present invention is directed to a method and system for providing multicasted (video) data streams to end user systems connected to an ATM network by means of an xDSL access system. The invention is characterized in that the multicasting is performed at the ATM level using a point-to-multipoint connection and controlled through the IGMP control messages terminated on the network termination (NT) (of the xDSL system) without using an "IP-server" as in the prior art. According to the method of the invention, the xDSL access system initiates an ATM point-to-multipoint connection with a source connected to the ATM network responsive to an IGMP control message received from one of the end user systems requesting a particular data stream. The source formats data from the particular data stream into IP packets, each IP packet having an IP multicast address. These IP packets are first encapsulated into Ethernet frames and then the source ATM encapsulates the IP packets into ATM cells and launches the cells into the ATM network on the ATM point-to-multipoint connection. The xDSL access system receives the ATM cells over the ATM point-to-multipoint connection and transmits the cells in an xDSL modulated signal to the end user system. An xDSL modem connected between the xDSL access system and the end user system receives the xDSL modulated signal, reassembles the IP packets from the ATM cells and sends the packets to the end user system; and then the end user system receives the IP packets and re-formats them into a particular data stream.

The invention also provides a management table that maps the IP multicast class "D" address to a VPI/VCI on the VFI (video feeder interface) for video content distribution to the desired DSL LIM (line interface module). Further, the management of the IGMP signalling channel between the OBC (on board controller) of the NT and the STBs used for creating, deleting, or modifying the ATM point-to-multipoint connections for video channel delivery; implementation of the IGMP protocol specific parameters, mainly timers and counters that are required for the IGMP state machines.

### DESCRIPTION OF THE DRAWINGS

The above and other objects, advantages and features of the invention will become more apparent when considered with the following specification and accompanying drawings wherein:

Figure 1 illustrates the integrated IGMP service incorporating the invention, and

Figure 2 illustrates the ASAM internal interfaces used in practicing the invention.

### DETAILED DESCRIPTION OF THE INVENTION

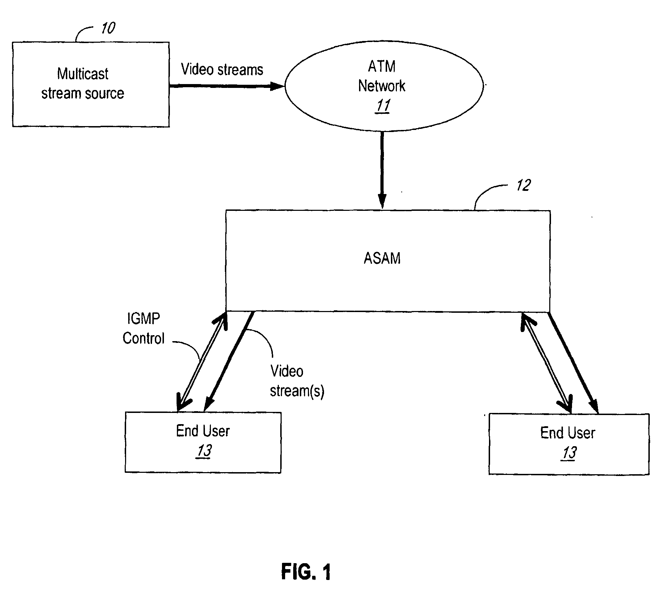

Figure 1 illustrates the integrated IGMP service. Referring to Figure 1, the integrated-IGMP feature assumes that the video streams from source 10 are pre-formatted in the correct IP Multicast Address and ATM encapsulation prior to being launched into the ATM network 11. At the ASAM 12, the NT is configured with the addresses of the source of the multicast streams. The NT does not perform IP multicast routing such as DVMRP/PIM, etc. On the upstream, the NT terminates IGMP control channels from each service subscriber and uses the IGMP control messages to initiate ATM point-to-multipoint connections. At the subscriber premises 13, an xDSL modem terminates the ATM point-to-multipoint flows and bridges the packets onto the end user's Ethernet LAN. once on the LAN, the end user's PC or Set-top-box 15 receives the multicast flows and an application on either of these devices presents the video as appropriate.

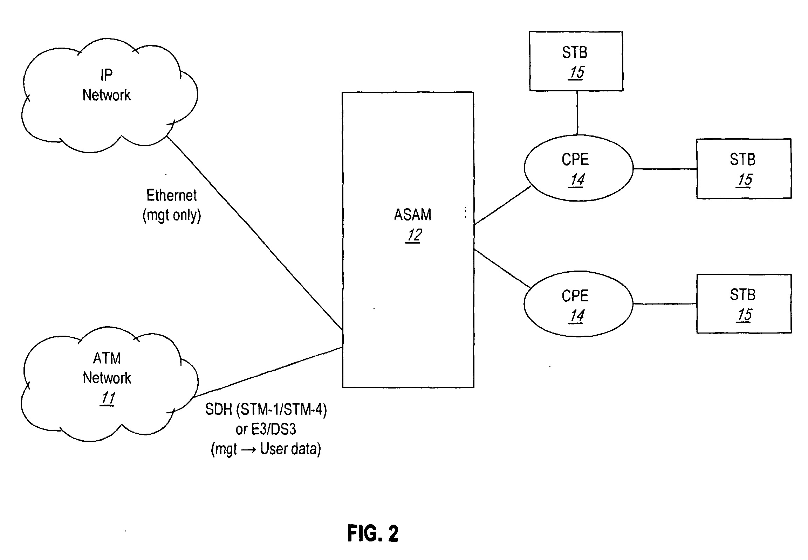

Figure 2 illustrates the ASAM external interfaces. Referring to Figure 2, the management interface statically configures the IGMP signalling channels and the multicast IGMP tables. The interface between ASAM and the CPE 14 carries the IGMP signalling information and the video channels that have been subscribed to. The user data interfaces are SONET/SDH because the broadcast TV channels require bandwidth per channel in the order of 3 Mbps. The interfaces may also be of type Gigabit Ethernet where the video streams are not ATM cells, instead they are Ethernet frames. Internally the ASAM remains ATM based, so all Ethernet frames sharing the same MAC address are ATM encapsulated and placed on a unique VPI/VCI.

Thus, the invention provides a method for delivering multicasted data streams comprising:
- the xDSL access system 12 initiates an ATM point-to-multipoint connection with a source connected to the ATM network 11 responsive to an IGMP control message received from one of the end user systems requesting a particular data stream;
- the source formats data from the particular data stream into IP packets, each IP packet having an IP multicast address;
- IP packets are first encapsulated into Ethernet frames and then the source ATM encapsulates the IP packets into ATM cells and launches the cells into the ATM network on the ATM point-to-multipoint connection;
- the xDSL access system 12 receives the ATM cells over the ATM point-to-multipoint connection, and transmits the cells in an xDSL modulated signal to the end user system 13;
- an xDSL modem connected between the xDST, access system and the end user system receives the xDSL modulated signal, reassembles the IP packets from the ATM cells, and sends the IP packets to the end user system 13; and
- the end user system receives the IP packets and re-formats them into the particular data stream.

The invention further provides for the:
1. management of the table that maps the IP multicast class "D" address to a VPI/VCI on the VFI (video feeder interface) for video content distribution to the desired DSL LIM (line interface module).
2. management of the IGMP signalling channel between the OBC (on board controller) of the NT and the STBs used for creating, deleting, or modifying the ATM point-to-multipoint connections for video channel delivery.
3. implementation of IGMP protocol specific parameters, mainly timers and counters that are required for IGMP state machines.

The invention has lower costs and better performance than the prior art approach.

while the invention has been described in relation to preferred embodiments of the invention, it will be appreciated that other embodiments, adaptations and modifications of the invention will be apparent to those skilled in the art.

### LIST OF ABBREVIATIONS

ASAM ATM Subscriber Access Multiplexer
ATM Asynchronous Transfer Mode
CPE Customer Premises Equipment
DSL Digital Subscriber Loop
DVMRP Distance vector Multicast Routing Protocol
IGMP Internet Group Management Protocol
IP Internet Protocol
ISM IP Services Module
LIM Line Interface Module
NT Network Termination
OBC On Board Controller
PIM Protocol Independent Multicast
STB Set Top Box
VCI Virtual Channel Identifier
VFI Video Feeder Interface
VoD video on Demand
VPI virtual Path Identifier

## Claims

1. A method for providing multicasted video data streams to end user systems connected to an asynchronous transfer mode (ATM) network by means of a digital subscriber line (xDSL) access system having a network termination (NT) comprising:
multicasting said data streams at said ATM network level using a point-to-multipoint connection and
controlling said multicasting through internet group management protocol (IGMP) control messages terminated at the network termination (NT) of the xDSL access system and in the absence of an internet protocol (IP) server.

2. The method defined in claim 1 wherein said xDSL access system initiates an ATM point-to-multipoint connection with a source connected to said ATM network and responsive to an IGMP control message received from one of the end user systems requesting a selected video data stream.

3. The method defined in claim 2 wherein said source formats data from selected data stream into IP packets, said IP packets having an IP multicast address.

4. The method defined in claim 3 wherein said IP packets are first encapsulated into Ethernet frames and then the source ATM network encapsulates the IP packet into ATM network cells and launches the cells into said ATM network on the ATM network point-to-multipoint connection.

5. The method defined in claim 4 wherein said xDSL access system receives the ATM network cells over said ATM network point-to-multipoint connection and transmits the cells in an xDSL modulated signal to said end user system.

6. The method defined in claim 5 wherein said xDSL modem is connected between the xDSL access system and said end user system and receives the xDSL modulated signal, reassembles the IP packets from the ATM network cells and sends the packets to the end user system, said end user system receiving the IP packets and reformatting same into a particular data stream.

7. The method defined in claim 6 including providing a management table for mapping the IP multicast class "D" address to a VPI/VCI on a video feeder interface for content distribution.
